Europäisches Patentamt

European Patent Office

Office européen des brevets

(11) Numéro de publication : **0 433 162 B1**

# (12) FASCICULE DE BREVET EUROPEEN

(45) Date de publication du fascicule du brevet :
03.08.94 Bulletin 94/31

(51) Int. Cl.⁵ : **G01S 1/02, G01S 1/56**

(21) Numéro de dépôt : **90403525.0**

(22) Date de dépôt : **11.12.90**

(54) Système d'aide à l'atterrissage du type MLS, comportant des moyens de surveillance centralisés.

(30) Priorité : **15.12.89 FR 8916617**

(43) Date de publication de la demande :
**19.06.91 Bulletin 91/25**

(45) Mention de la délivrance du brevet :
**03.08.94 Bulletin 94/31**

(84) Etats contractants désignés :
**CH DE GB IT LI**

(56) Documents cités :
**US-A- 3 820 074**
**US-A- 4 814 773**
**NEC RESEARCH & DEVELOPMENT, no. 59, octobre 1980, pages 34-45, Tokyo, JP; G. ONODERA et al.: "Development of approach elevation equipment in MLS"**
**G.E.C. JOURNAL OF RESEARCH, vol. 2, no. 2, 1984, pages 66-75, Londres, GB; J.R.WALLINGTON et al.: "Optical techniques for signal distribution in phased arrays"**

(56) Documents cités :
**NAVIGATION, vol. 29, no. 114, avril 1981, pages 174-187, Paris, FR; B.LETOQUART et al.: "Le MLS un exemple d'utilisation du microprocesseur"**
**IEEE, COMPUTER SOCIETY INTERNATIONAL CONFERENCE, Washington, DC, 7-10 septembre1976, no. 13, pages 264-268, New York, US; J.M. HUGHES: "Multimicroprocessor navigation systems"**

(73) Titulaire : **THOMSON-CSF**
**173, Boulevard Haussmann**
**F-75008 Paris (FR)**

(72) Inventeur : **Grousseau, Alain**
**Thomson-CSF,**
**SCPI,**
**Cedex 67**
**F-92045 Paris La Défense (FR)**

(74) Mandataire : **Benoit, Monique et al**
**THOMSON-CSF**
**SCPI**
**B.P. 329**
**50, rue Jean-Pierre Timbaud**
**F-92402 Courbevoie Cédex (FR)**

## Description

La présente invention se rapporte au domaine des systèmes d'aide à l'atterrissage du type MLS. Elle a plus particulièrement pour objet un système MLS comportant des moyens de surveillance centralisés.

On rappelle que le système MLS (initiales de l'expression anglo-saxonne "Microwave Landing System") est un système permettant de guider un avion à l'atterrissage en lui fournissant différentes informations, appelées "fonctions": des informations angulaires, telles que son angle d'azimut par rapport à l'axe de la piste, son angle de site par rapport à l'horizontale, éventuellement d'autres informations annexes telles que azimut arrière par exemple, et un certain nombre de données, les unes dites "de base" et les autres dites "auxiliaires". Ces différentes informations sont émises en permanence à partir du sol en multiplexage temporel sur une même fréquence, selon des caractéristiques normalisées par l'OACI (Organisation de l'Aviation Civile Internationale), annexe 10 paragraphe III.11. La définition par l'OACI d'un système MLS inclut encore un équipement de mesure de distance, connu sous les initiales DME (de l'expression anglo-saxonne "Distance Measuring Equipment"). Ces informations sont décodées par chaque avion intéressé. Un tel système est décrit par exemple dans le document G. ONODERA et al, NEC research and development, vol.59, octobre 1980, pages 34-35.

Chacune des fonctions précédentes se décompose en deux parties, émises successivement:

- un préambule, dont le rôle est de fournir à l'avion une identification de la fonction qui va suivre; ce préambule est émis par une antenne dite sectorielle, c'est à dire une antenne fixe émettant dans l'ensemble de la zone, ou secteur, que le système MLS doit couvrir; selon la norme OACI, le préambule se présente sous la forme d'un mot de douze bits permettant l'identification de façon bi-univoque de chacune des fonctions; ce mot binaire est émis en modulation de phase de type DPSK (pour "Differential Phase Shift Keying" ou codage de phase différentiel);
- la fonction proprement dite: dans le cas où cette fonction est une donnée, elle est émise par l'antenne sectorielle également en modulation de phase DPSK; dans le cas où cette fonction est une information angulaire, elle est constituée par deux impulsions émises à l'aide d'une antenne à balayage électronique, selon le principe dit du faisceau battant à référence temporelle, qui est notamment décrit dans la demande de brevet français n° 2.549.321 au nom de THOMSON-CSF.

Un système MLS comporte donc au moins autant de stations que de fonctions angulaires à émettre.

Il apparaît ainsi que les différentes informations nécessaires pour le guidage d'un avion sont émises par des stations distinctes, successivement sur une même fréquence. Il est clair que l'ordre et la durée des émissions doivent être respectés rigoureusement pour que soit assurée la sécurité nécessaire au guidage, surtout lors de l'atterrissage dont on sait qu'il s'agit d'une phase particulièrement délicate. En particulier, tout recouvrement des émissions doit être soigneusement évité. Pour garantir cette sécurité, de nombreux dispositifs ou solutions sont connus et qui prévoient:

- une grande redondance des matériels;
- des liaisons de synchronisation entre les stations, de préférence redondantes elles aussi;
- de nombreuses boucles de surveillance du déroulement des émissions.

Ces différentes solutions tendent à multiplier et compliquer les matériels et les circuits; elles ont notamment le défaut de diminuer la fiabilité de l'ensemble.

La présente invention se propose d'augmenter la sécurité d'un système MLS sans en diminuer la fiabilité.

A cet effet, selon l'invention, on centralise les moyens de surveillance des émissions des différentes stations en une même station centrale, qui assure alors la commande des différentes stations MLS, la connexion entre la station centrale et les stations MLS étant assurée par un réseau de fibres optiques.

Plus précisément, l'invention a pour objet un système d'aide à l'atterrissage du type MLS, tel que défini par la revendication 1.

Dans une variante de réalisation, les signaux hyperfréquences que doivent émettre les stations MLS sont engendrés également dans la station centrale.

De la sorte, il apparaît que la surveillance des émissions est effectuée dans de meilleures conditions et que le nombre d'équipements est réduit, augmentant ainsi la sécurité et la fiabilité du système, et diminuant son coût.

D'autres objets, particularités et résultats de l'invention ressortiront de la description suivante, donnée à titre d'exemple non limitatif et illustrée par les dessins annexés, qui représentent:

- la figure 1, un schéma d'implantation d'un système MLS de type connu;
- la figure 2, un schéma synoptique d'une station MLS de type connu;
- les figures 3a et 3b, un premier mode de réalisation selon l'invention respectivement d'une station centrale de surveillance et d'une station MLS qui lui est adaptée;
- les figures 4a et 4b, un deuxième mode de réalisation selon l'invention respectivement d'une station centrale de surveillance et d'une station MLS qui lui est adaptée.

Sur ces différentes figures, les mêmes références se rapportent à des éléments analogues.

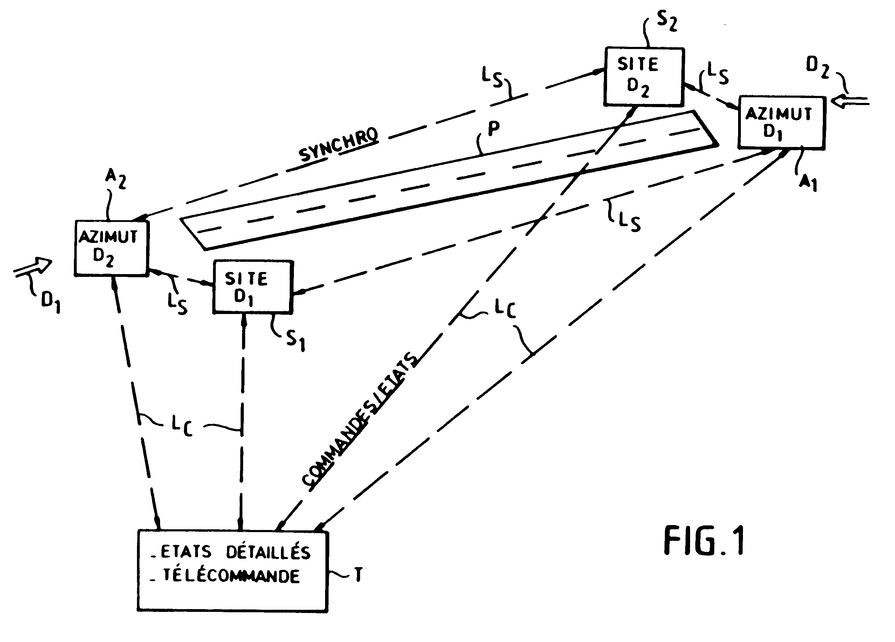

La figure 1 est donc le schéma d'une implantation classique d'un système MLS.

Ce système se compose d'un ensemble de stations MLS disposées autour d'une piste d'atterrissage, repérée P, qui fait habituellement plusieurs kilomètres. Pour un sens donné d'utilisation de la piste P, par exemple le sens $D_1$, l'information d'angle d'azimut est donnée par une première station $A_1$, disposée dans l'axe de la piste et à l'autre extrémité de celle-ci par rapport au point d'atterrissage (ou entrée de piste). L'information d'angle de site est donnée par une seconde station, repérée $S_1$, et disposée près de l'entrée de piste, de préférence latéralement. Dans le cas où on veut disposer d'une information d'azimut arrière, le système comporte une troisième station, repérée $A_2$, et disposée dans l'axe de la piste côté entrée de piste. Lorsque la piste peut être utilisée dans l'autre sens (flèche $D_2$), le système comprend un second ensemble de deux stations, azimut et site respectivement; la station azimut pour le sens $D_2$ peut être la même station $A_2$ que celle qui fournit l'information d'azimut arrière pour le sens $D_1$; l'information de site pour le sens $D_2$ sera donnée par une quatrième station, repérée $S_2$, disposée au voisinage de l'entrée de piste dans le sens $D_2$, de la même manière que la station $S_1$. En outre, un équipement de mesure de distance DME est nécessaire pour chaque sens de piste; il est en général disposé dans la station azimut ($A_1$ et $A_2$), sans que cela soit nécessaire. Un tel équipement DME est par exemple décrit dans la demande de brevet français n° 2.576.111 au nom de THOMSON-CSF.

Afin d'éviter le recouvrement des émissions de ces différentes stations, toutes les stations susceptibles de travailler pour un sens de piste donné sont reliées entre elles par des liaisons de synchronisation, représentées sur la figure en pointillés et reperées $L_s$.

En outre, ces différentes stations sont reliées à une salle technique T par des liaisons $L_c$ repérées en pointillés et permettant à un opérateur de télécommander le fonctionnement des stations et d'en recevoir des compte-rendus (états détaillés).

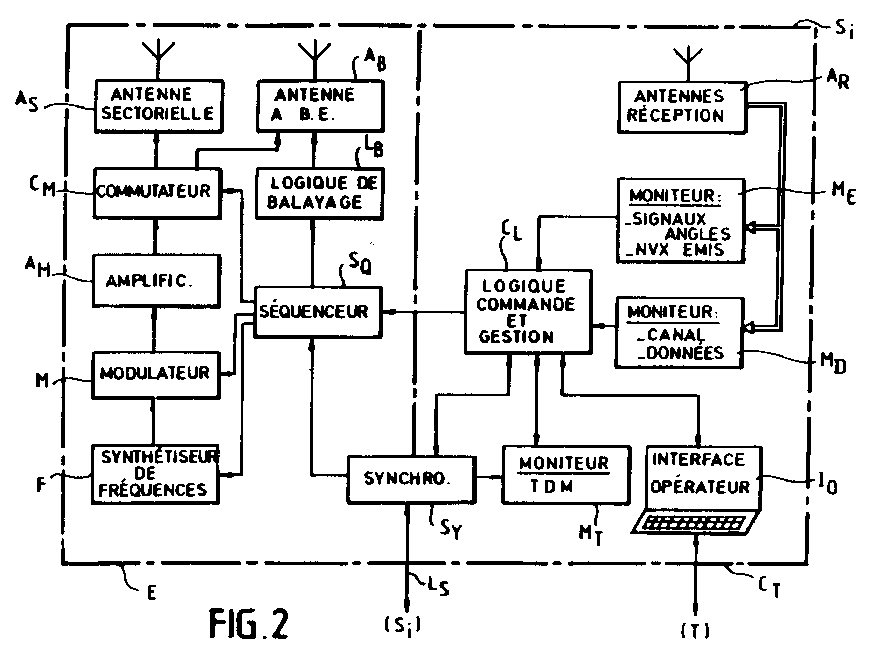

La figure 2 est un schéma synoptique d'une station MLS de type connu.

Une telle station est chargée d'émettre l'une des fonctions MLS (azimut, site, azimut arrière...) ; elle est repérée $S_i$ et représente l'une des stations MLS de la figure 1 ($S_1$, $S_2$, $A_1$ ou $A_2$).

Cette station $S_i$ comporte essentiellement deux parties, une partie située à gauche de la figure et repérée E, comportant les moyens d'émission de la station, et une partie située à droite et repérée $C_T$, comportant les moyens de contrôle du fonctionnement de la station.

La partie émetteur E comporte, en cascade:
- un synthétiseur de fréquences F, fournissant un signal sinusoïdal destiné à former une onde porteuse, dont la fréquence est voisine de 5 GHz selon la norme OACI (on rappelle que, selon cette norme, une fréquence, ou canal, parmi 200 fréquences prédéfinies, voisines de 5 GHz, est affectée à chaque système MLS);
- un modulateur M du signal fourni par synthétiseur F, qui réalise une modulation de phase DPSK à deux états, permettant d'émettre le préambule et les données;
- un amplificateur hyperfréquence $A_H$, réalisé à l'aide de tubes ou de transistors selon la puissance requise; celle-ci est classiquement de l'ordre de 20 Watts et donc, le plus souvent, l'amplificateur est réalisé à l'aide de transistors;
- un commutateur $C_M$, relié à la fois à une antenne sectorielle $A_s$, à une antenne à balayage électronique $A_B$ et éventuellement, à des antennes (non représentées) dites OCI (pour Out of Coverage Indicator ou indicateur de situation hors couverture), ayant pour fonction d'indiquer à l'avion que, étant en dehors de la couverture du système MLS, il ne doit pas prendre en compte les signaux qu'il reçoit; le commutateur $C_M$ est chargé de commuter le signal produit par la chaîne précédente vers l'une des antennes.

Les moyens d'émission E comportent encore un séquenceur $S_Q$, assurant la commande des éléments F, M, $A_H$ et $C_M$, ainsi que celle de l'antenne à balayage électronique $A_B$ par l'intermédiaire d'un circuit logique de balayage $L_B$.

De la sorte et sous la commande du séquenceur $S_Q$, les moyens d'émission F à $A_H$ fournissent un signal, par l'intermédiaire du commutateur $C_M$, soit à l'antenne sectorielle $A_s$ pour l'émission du préambule et des données, soit à l'antenne à balayage électronique $A_B$ pour l'émission de l'information angulaire, soit aux antennes OCI pour les indications de situation hors couverture.

La partie contrôle $C_T$ de la station MLS comporte:
- un ensemble d'antennes de réception $A_R$, ou capteurs, pour recevoir le signal tel qu'émis par la station $S_i$; cet ensemble peut comporter un capteur externe, par exemple du type cornet, analogue au récepteur porté par les avions guidés, placé à quelques dizaines de mètres des antennes; il peut comporter également un dispositif de prélèvement du signal situé au niveau de chacune des antennes elles-mêmes, connu sous le nom de moniteur intégral;
- un ensemble de trois moniteurs: $M_E$, $M_D$ et $M_T$, ayant chacun pour fonction d'effectuer des tests prédéfinis sur les informations qu'ils reçoivent des antennes de réception $A_R$, c'est-à-dire d'effectuer des mesures sur ces informations et de les comparer à des valeurs de référence qu'ils ont en mémoire; lorsque les différences entre les résultats des mesures et les valeurs de référence excèdent des limites prédéfinies, les moniteurs, chacun pour les données qui les concernent, fournissent un signal d'alarme; le moniteur $M_E$ est chargé de la surveillance des niveaux des signaux émis par les antennes et de la position des impulsions correspondant aux informations angulaires; le moniteur $M_D$ est chargé de surveiller la fréquence d'émission qui doit, on le rappelle, correspondre à un canal MLS prédéterminé, ainsi que les préambules et les données émis par l'antenne sectorielle; le moniteur $M_T$, dit moniteur TDM, est chargé de surveiller le multiplexage dans le temps des différentes informations MLS;

- des circuits logiques $C_L$ de commande et de gestion, en général constitués par un microprocesseur, recevant les signaux des différents moniteurs et commandant en conséquence l'arrêt-marche de la station par l'intermédiaire d'un ou plusieurs parmi les éléments F, M, $A_H$, $C_M$ et $S_Q$.

La partie contrôle comporte encore des moyens d'interface $I_0$ avec un opérateur, reliés aux circuits logiques de commande $C_L$ et susceptibles d'échanger ordres télécommandés et compte-rendus avec la salle technique T (figure 1).

La station décrite ici est composée d'une chaîne d'émission unique. Pour des raisons de disponibilité, de sécurité ou de fiabilité, elle peut bien entendu être doublée. Ceci conduit à la création d'une deuxième chaîne E et à la modification corrélative des moyens assurant les fonctions de contrôle, de commande et de gestion.

La station $S_i$ comporte encore un circuit $S_y$ d'émission et de réception des informations de synchronisation véhiculées par les liaisons $L_s$ et en provenance des autres stations $S_i$ du système MLS. Afin d'assurer la synchronisation entre les stations $S_i$, une des solutions possibles est que chacune des stations envoie à la station qui la suit dans l'ordre des émissions une (ou plusieurs) impulsion de synchronisation, sur commande de l'unité logique $C_L$ et via le circuit $S_y$ et la liaison $L_s$; la réception de cette impulsion par le circuit $S_y$ de la station concernée, éventuellement après un retard prédéfini, déclenche l'émission par l'intermédiaire du séquenceur $S_Q$; elle peut déclencher également l'envoi d'un accusé de réception vers la station ayant émis l'impulsion de synchronisation. Plus généralement, la synchronisation a pour but d'assurer le séquencement des émissions selon les normes OACI, à l'aide d'échanges d'ordres et de compte-rendus sur le réseau de liaisons $L_s$. Par ailleurs, le moniteur $M_T$ assure la surveillance du multiplexage sur la base des informations qu'il reçoit du circuit $S_y$ et de sa propre station.

Il apparaît ainsi que le non-recouvrement des différentes émissions MLS repose entièrement sur la réception d'impulsions de synchronisation, avec le risque inhérent à ce type de procédé.

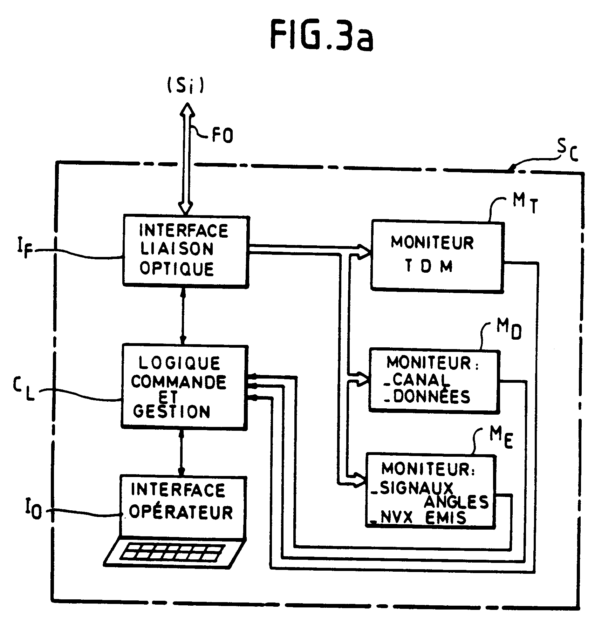

La figure 3a représente un premier mode de réalisation selon l'invention d'une station centrale de surveillance pour un système MLS.

Selon l'invention, l'ensemble des stations MLS, repérées $S_i$, sont reliées à une station centrale $S_c$ à l'aide d'un réseau de fibres optiques FO.

Dans la station centrale ($S_c$), les signaux sont reçus par une interface de liaison optique $I_F$ afin d'être transformés en signaux électriques. Ils sont ensuite dirigés vers un moniteur TDM $M_T$, un moniteur $M_D$ de canal et de donnée et enfin un moniteur $M_E$, surveillant les signaux de fonction angulaire et les niveaux émis par les antennes. Les résultats de l'ensemble des tests effectués par ces moniteurs sont adressés à une unité logique de commande et de gestion $C_L$, qui est par ailleurs en liaison avec une interface opérateur $I_0$ et l'interface de liaison optique $I_F$.

Typiquement, l'interface $I_F$ comporte une diode laser assurant la conversion d'un signal électrique en un signal optique à destination du réseau FO, et une photo-diode assurant la conversion réciproque; elle peut en outre comporter des moyens de multiplexage-démultiplexage. Le réseau de fibres optiques FO peut être de tout type connu, par exemple en étoile, en anneau, ou encore formé par un ensemble de liaisons point à point, chaque liaison comportant une ou plusieurs fibres optiques.

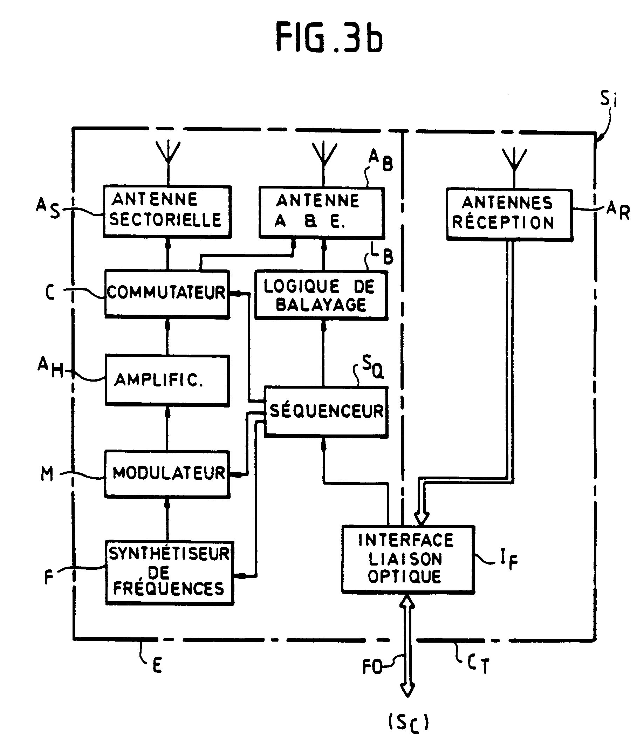

La figure 3b représente une station MLS $S_i$, adaptée pour recevoir les signaux émis par la station centrale de la figure 3a.

Comme précédemment (figure 2), la station $S_i$ comporte une partie moyens d'émission E et une partie contrôle $C_T$.

La partie émission E est identique à ce qui a été décrit figure 2, sauf en ce qui concerne la commande du séquenceur $S_Q$ qui, ici, est effectuée non pas par le récepteur de synchronisation $S_y$ (figure 2) mais par une interface de liaison optique $I_F$ analogue à celle de la figure 3a, elle-même reliée au réseau de fibres optiques FO en provenance de la station centrale $S_c$.

La partie contrôle $C_T$ est ici très simplifiée puisqu'elle ne comporte plus que les antennes de réception $A_R$, qui sont reliées directement via l'interface $I_F$ et le réseau optique FO à la station centrale $S_c$.

L'ensemble constitué par la station centrale $S_c$ (figure 3a) et les stations MLS $S_i$ (figure 3b) fonctionne de la façon suivante.

Sous la commande de l'unité logique centrale $C_L$, via le réseau optique FO, chacune des stations $S_i$ émet à son tour les signaux MLS dont elle est chargée.

Les informations de contrôle fournies par les capteurs $A_R$ de chaque station $S_i$ sont adressées, via le réseau optique FO, à la station centrale $S_c$. A cet effet, les signaux fournis par chaque capteur peuvent être multiplexés au niveau de l'interface $I_F$ de chaque station $S_i$, et démultiplexés de la même manière dans la station centrale $S_c$. Selon un autre mode de réalisation, les signaux fournis par chaque capteur peuvent être acheminés vers la station centrale $S_c$ par des fibres optiques distinctes, par exemple par modulation directe de l'onde lumineuse émise par la diode laser ; dans ce cas, les signaux de commande sont alors soit multiplexés avec les précédents, soit acheminés également par une fibre optique distincte.

Il est à noter que l'interface $I_F$ de la station centrale assure en outre, le cas échéant, la compensation des différences de temps de propagation dans le réseau optique FO entre la station $S_c$ et les différentes stations $S_i$.

Il est ainsi recréé dans la station centrale $S_c$ le multiplexage temporel des différents signaux MLS tel qu'il est reçu par l'avion à guider. Il en résulte que le contrôle est effectué dans de meilleures conditions puisque plus proches des conditions réelles que dans le système classique tel que décrit figures 1 et 2.

De plus, cet accroissement de sécurité ne se fait pas par accroissement de la complexité du système mais, au contraire, s'accompagne d'une réduction du nombre de circuits nécessaires, à redondance donnée : en effet, les éléments sont désormais en un seul exemplaire dans la station centrale $S_c$ et non plus multipliés en autant d'exemplaires que de stations MLS $S_i$.

Une conséquence en est une augmentation de la fiabilité. On sait en effet que la fiabilité d'une chaîne de sous-ensembles est une fonction inverse du nombre de sous-ensembles constituant la chaîne. Plus précisément, si le taux de panne d'un sous-ensemble $\underline{i}$ est $p_i$, la probabilité P de fonctionnement de la chaîne à l'instant $\underline{t}$ est:

$$P = e^{-pt} \quad \text{avec} \quad p = \sum_i p_i$$

Pour une chaîne redondante, où les sous-ensembles sont doublés, on remplace $e^{-p_it}$ par $(2e^{-p_it} - e^{2p_it})$.

Par ailleurs, la sécurité du système dépend également du risque de rayonner un signal erroné, donc dangereux. La probabilité $P_R$ de rayonner un tel signal est le produit :

$$P_R = P_{em} \cdot P_{pc}$$

où :
- $P_{em}$ est la probabilité de panne de l'ensemble d'émission (en se limitant au cas d'un signal dangereux); elle est une fonction inverse de la fiabilité de l'ensemble d'émission;
- $P_{pe}$ est la probabilité qu'une panne ne soit pas vue par l'ensemble de contrôle (panne cachée de l'ensemble de contrôle); elle est une fonction inverse de la fiabilité de l'ensemble de contrôle.

Il en résulte que la sécurité est une fonction du produit fiabilité de l'ensemble d'émission par fiabilité de l'ensemble de contrôle. Elle se trouve donc augmentée par l'amélioration de la fiabilité de l'ensemble de contrôle.

Enfin, une autre conséquence de la réduction du nombre de circuits est bien entendu une réduction du coût du système.

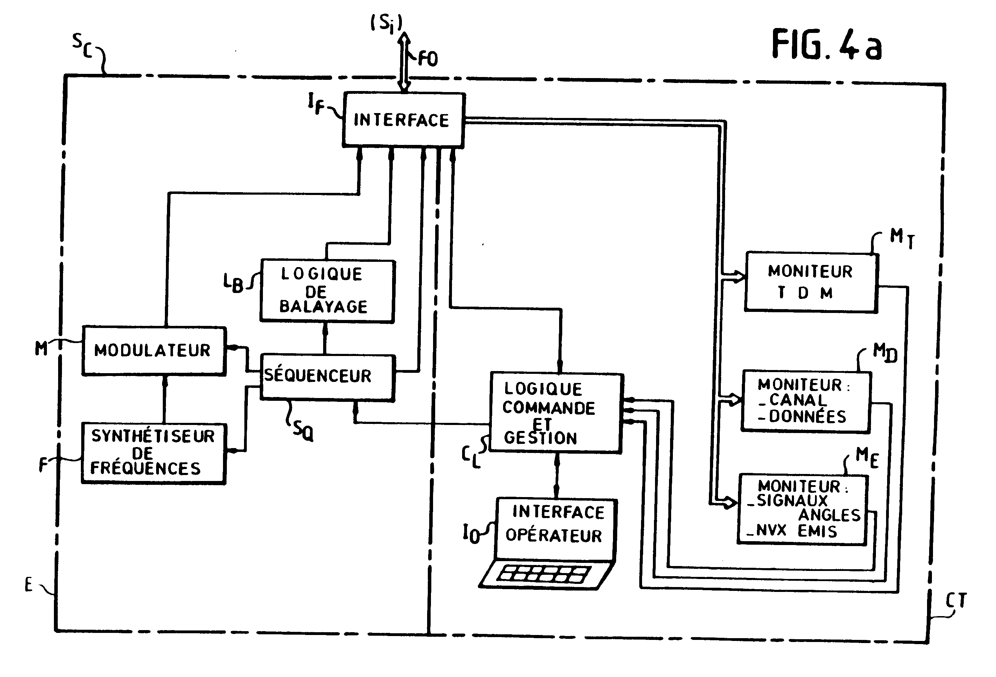

La figure 4a représente un deuxième mode de réalisation d'une station centrale pour un système MLS selon l'invention.

Cette station $S_c$ comporte une partie E, assurant la génération d'un signal hyperfréquence et une partie $C_T$, en assurant le contrôle.

La partie émission E comporte un synthétiseur de fréquence F et un modulateur de phase M analogues à ceux des stations MLS classiques (figure 2), qui fournissent un signal hyperfréquence modulé, sous la commande d'un séquenceur $S_Q$ analogue à celui de la figure 2. Ce signal est fourni au circuit d'interface optique $I_F$. La partie émission E comporte encore le circuit de logique de balayage $L_B$, commandé par le séquenceur $S_Q$ et fournissant ses signaux de commande à l'interface $I_F$. Comme précédemment, l'interface $I_F$ peut comporter des moyens de multiplexage-démultiplexage. Dans un mode de réalisation, le réseau FO est un réseau de liaisons point à point, chaque liaison comportant une fibre optique affectée à la transmission des signaux produits par la partie émission E. Dans ce cas, le signal hyperfréquence modulé par le modulateur M vient moduler directement la fréquence de l'onde optique émise par la diode laser de l'interface $I_F$ dans la fibre optique affectée à l'émission, et les autres informations à transmettre sont par exemple multiplexées et transmises par tout moyen dans la bande passante restante de la même fibre optique.

La partie contrôle $C_T$ comporte les mêmes éléments que ceux qui sont décrits figure 3a, à ceci près que le circuit logique de commande et de gestion $C_L$ est en outre relié au séquenceur $S_Q$.

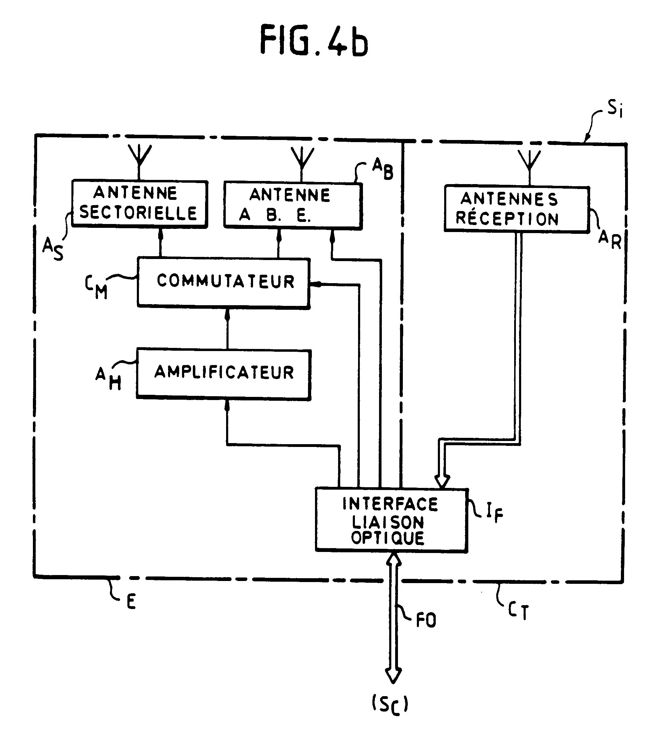

La figure 4b représente une station MLS $S_i$ adaptée pour recevoir les signaux émis par une station centrale telle que représentée sur la figure 4a.

La station $S_i$ comporte également une partie émission E et une partie contrôle $C_T$.

La partie contrôle $C_T$ comporte comme précédemment (figure 3b) uniquement les antennes de réception $A_R$, reliées directement à l'interface $I_F$.

La partie émission E ne comporte plus que l'amplificateur hyperfréquence $A_H$, recevant le signal à amplifier de l'interface $I_F$ et le transmettant au commutateur $C_M$, lui-même commandé par l'interface $I_F$ et fournissant le signal à émettre, soit à l'antenne sectorielle $A_S$, soit à l'antenne à balayage électronique $A_B$, soit encore aux antennes OCI (non représentées).

Ce deuxième mode de réalisation, qui intègre à la station centrale tous les moyens d'émission, hors amplification et antennes, présente différents avantages.

Tout d'abord, il permet d'accentuer les effets précédemment décrits de réduction de matériel et d'accroissement de sécurité et de fiabilité.

Notamment, comme mentionné plus haut, la sécurité du système est une fonction du produit fiabilité de l'ensemble d'émission par fiabilité de l'ensemble de contrôle. Elle se trouve donc augmentée ici par l'amélioration de la fiabilité des deux ensembles.

De plus, tous les signaux étant ici engendrés séquentiellement en un même point, la synchronisation des différentes émissions est effectuée automatiquement, le moniteur TDM $M_T$ de la station centrale n'ayant plus qu'à vérifier le bon fonctionnement de la partie émission E de cette station. La sécurité du système s'en trouve ainsi encore grandement améliorée.

## Revendications

1. Système d'aide à l'atterrissage du type MLS, consistant à émettre à destination d'un avion, en multiplexage temporel sur une même fréquence porteuse, des informations dites fonctions, comprenant successivement un préambule et soit des données, soit des informations angulaires, le système comportant au moins deux stations MLS ($S_l$) qui comportent chacune;
   - une antenne sectorielle ($A_S$), assurant l'émission des préambules et des données, sous forme de l'onde porteuse modulée en phase;
   - une antenne à balayage électronique ($A_B$), assurant l'émission des informations angulaires, sous forme de balayages d'un faisceau de l'onde à la fréquence porteuse;
   - des moyens de contrôle ($C_T$) du fonctionnement de la station;
   le système étant caractérisé par le fait qu'il comporte en outre une station centrale ($S_c$), comportant des moyens propres de contrôle ($C_T$), reliés aux moyens de contrôle des stations MLS ($S_l$) par au moins une fibre optique (FO) et des moyens d'interface ($I_F$) de la fibre optique avec les moyens de contrôle;
   que les moyens propres de contrôle ($C_T$) de la station centrale ($S_c$) comportent:
   - des premiers moyens moniteurs ($M_T$) assurant le contrôle du multiplexage temporel des fonctions MLS, reliés aux moyens d'interface ($I_F$);
   - des deuxièmes moyens moniteurs ($M_D$) assurant le contrôle de la fréquence porteuse et des données, reliés aux moyens d'interface ($I_F$);

   - des troisièmes moyens moniteurs ($M_E$) assurant le contrôle des informations angulaires et du niveau des signaux émis, reliés aux moyens d'interface ($I_F$);
   - des moyens logiques ($C_L$) de commande et de gestion de la station centrale et des stations MLS, reliés à l'ensemble des moyens propres de contrôle et aux moyens d'interface ($I_F$);
   et que chacune des stations MLS ($S_l$) comporte des moyens d'interface ($I_F$) de la fibre optique (FO) avec ses moyens de contrôle ($C_T$), ces derniers comportant au moins une antenne de réception ($A_R$) des signaux émis par la station, fournissant ces signaux reçus aux moyens d'interface ($I_F$) à destination de la station centrale ($S_c$).

2. Système selon la revendication 1, caractérisé par le fait que chacune des stations MLS ($S_l$) comporte des moyens d'émission (E), ceux-ci comportant:
   - des moyens (F) de génération d'un signal à la fréquence porteuse;
   - des moyens (M) de modulation du signal précédent par les préambules et les données;
   - des moyens ($A_H$) d'amplification des signaux reçus des moyens de modulation;
   - un commutateur ($C_M$) assurant la commutation des signaux amplifiés entre l'antenne sectorielle ($A_S$) et l'antenne à balayage électronique ($A_B$).

3. Système selon la revendication 1, caractérisé par le fait que la station centrale ($S_c$) comporte en outre des moyens d'émission (E), ceux-ci comportant:
   - des moyens (F) de génération d'un signal à la fréquence porteuse;
   - des moyens (M) de modulation du signal précédent par les préambules et les données, fournissant le signal modulé aux moyens d'interface ($I_F$) à destination des stations MLS ($S_l$).

4. Système selon la revendication 3, caractérisé par le fait que chacune des stations MLS ($S_l$) comporte des moyens d'émission (E), ceux-ci comportant:
   - des moyens d'amplification ($A_H$) des signaux reçus de la station centrale ($S_c$) par les moyens d'interface ($I_F$);
   - un commutateur ($C_M$) assurant la commutation des signaux amplifiés entre l'antenne sectorielle ($A_S$) et l'antenne à balayage électronique ($A_B$).

**Patentansprüche**

1. Landungshilfssystem vom Typ MLS, bei welchem zu einem Flugzeug im Zeitmultiplex auf einer gleichen Trägerfrequenz Informationen, sogenannte Funktionen, gesendet werden, die nacheinander einen Vorsatz und Daten oder Winkelinformationen enthalten, wobei das System wenigstens zwei MLS-Stationen ($S_i$) enthält, die jeweils enthalten:
   - eine Sektorantenne ($A_s$), die das Aussenden von Vorsätzen und von Daten in Form einer phasenmodulierten Trägerwelle ermöglicht;
   - eine Antenne ($A_B$) mit elektronischer Strahlschwenkung, die das Aussenden von Winkelinformationen in Form von Durchläufen eines Strahlenbündels der Welle mit der Trägerfrequenz ermöglicht;
   - Mittel ($C_T$) zum Kontrollieren der Arbeitsweise der Station;

   wobei das System gekennzeichnet ist durch die Tatsache, daß es ferner eine Zentralstation ($S_c$) mit eigenen Kontrollmitteln ($C_T$), die an die Steuermittel der MLS-Stationen ($S_i$) über wenigstens eine Lichtleitfaser (FO) angeschlossen sind, und Schnittstellenmitteln ($I_F$) der Lichtleitfaser mit den Kontrollmitteln enthält;
   daß die eigenen Kontrollmittel ($C_T$) der Zentralstation ($S_c$) enthalten:
   - erste Überwachungsmittel ($M_T$), die die Kontrolle der zeitlichen Multiplexierung der MLS-Funktionen ermöglichen, die an die Schnittstellenmittel ($I_F$) angelegt werden;
   - zweite Überwachungsmittel ($M_D$), die die Kontrolle der Trägerfrequenz und der Daten ermöglicht, die an die Schnittstellenmittel ($I_F$) angelegt werden;
   - dritte Überwachungsmittel ($M_E$), die die Kontrolle der Winkelinformationen und des Pegels der gesendeten Signale ermöglichen, die an die Schnittstellenmittel ($I_F$) angelegt werden;
   - Logikmittel ($C_L$) zum Steuern und Verwalten der Zentralstation und der MLS-Stationen, die an die Gruppe der eigenen Kontrollmittel und an die Schnittstellenmittel ($I_F$) angeschlossen sind;
   - und daß jede der MLS-Stationen ($S_i$) Schnittstellenmittel ($I_F$) der Lichtleitfaser (FO) mit den Kontrollmitteln ($C_T$) enthält, wobei letztere wenigstens eine Empfangsantenne ($A_R$) für die von der Station ausgesendeten Signale enthält und diese empfangenen Signale an die Schnittstellenmittel ($I_F$) mit Bestimmung für die Zentralstation ($S_c$) liefert.

2. System nach Anspruch 1, gekennzeichnet durch die Tatsache, daß jede der MLS-Stationen ($S_i$) Sendemittel (E) enthält, die enthalten:
   - Mittel (F) zum Erzeugen eines Signals mit der Trägerfrequenz;
   - Mittel (M) zum Modulieren des vorgenannten Signals durch die Vorsätze und die Daten;
   - Mittel ($A_H$) zum Verstärken der von den Modulationsmitteln empfangenen Signale;
   - einen Umschalter ($C_M$), der das Umschalten der verstärkten Signale zwischen der Sektorantenne ($A_S$) und der Antenne ($A_B$) mit elektronischer Strahlschwenkung ermöglicht.

3. System nach Anspruch 1, gekennzeichnet durch die Tatsache, daß die Zentralstation ($S_c$) ferner Sendemittel (E) enthält, die enthalten:
   - Mittel (F) zum Erzeugen eines Signals mit der Trägerfrequenz;
   - Mittel (M) zum Modulieren des vorgenannten Signals durch die Vorsätze und die Daten und zum Liefern des modulierten Signals an die Schnittstellenmittel ($I_F$) mit Bestimmung zu den MLS-Stationen ($S_i$).

4. System nach Anspruch 3, gekennzeichnet durch die Tatsache, daß jede der MLS-Stationen ($S_i$) Sendemittel (E) enthält, die enthalten:
   - Mittel ($A_H$) zum Verstärken der von der Zentralstation ($S_c$) von den Schnittstellenmitteln ($I_F$) empfangenen Signale;
   - einen Umschalter ($C_M$), der das Umschalten der verstärkten Signale zwischen der Sektorantenne ($A_S$) und der Antenne ($A_B$) mit elektronischer Strahlschwenkung ermöglicht.

**Claims**

1. Landing aid system of the MLS type, consisting of transmitting, towards an aircraft, in time-division multiplexing on the same carrier frequency, information known as functions, successively comprising a preamble and either data or angular information, the system including at least two MLS stations ($S_i$) which each include:
   - a sector antenna ($A_s$), carrying out transmission of the preambles and of the data, in the form of the phase modulated carrier wave;
   - an electronic-scanning antenna ($A_B$), carrying out transmission of the angular information, in the form of scans of a beam of the wave at the carrier frequency;
   - means ($C_T$) for checking the operation of the station;

the system being characterized in that it further includes a central station (S$_c$), including specific checking means (C$_T$), linked to the means for checking the MLS stations (S$_i$) by at least one optical fibre (FO), and means (I$_F$) for an interface of the optical fibre with the checking means;

in that the checking means (C$_T$) specific to the central station (S$_c$) include:

- first monitor means (M$_T$) carrying out checking of the time-division multiplexing of the MLS functions, which are linked to the interface means (I$_F$);
- second monitor means (M$_D$) carrying out checking of the carrier frequency and of the data, linked to the interface means (I$_F$);
- third monitor means (M$_E$) carrying out checking of the angular information and of the level of the transmitted signals, linked to the interface means (I$_F$);
- logic means (C$_L$) for control and management of the central station and of the MLS stations, linked to all of the specific checking means and to the interface means (I$_F$);

and in that each of the MLS stations (S$_i$) includes means (I$_F$) for interface of the optical fibre (FO) with its own checking means (C$_T$), the latter including at least one receiving antenna (A$_R$) for the signals transmitted by the station, supplying these received signals to the interface means (IF), which signals are destined for the central station (S$_c$).

2. System according to Claim 1, characterized in that each of the MLS stations (S$_i$) includes transmission means (E), the latter including:
   - means (F) for generating a signal at the carrier frequency;
   - means (M) for modulating the preceding signal by the preambles and the data;
   - means (A$_H$) for amplifying the signals received from the modulation means;
   - a changeover switch (C$_M$) carrying out changeover switching of the amplified signals between the sector and antenna (A$_s$) and the electronic-scanning antenna (A$_B$)

3. System according to Claim 1, characterized in that the central station (S$_c$) further includes transmission means (E), the latter including:
   - means (F) for generating a signal at the carrier frequency;
   - means (M) for modulating the preceding signal by the preambles and the data, supplying the modulated signal to the interface means (I$_F$), which signals are destined for the MLS stations (S$_i$).

4. System according to Claim 3, characterized in that each of the MLS stations (S$_i$) includes transmission means (E), the latter including:
   - means (A$_H$) for amplifying the signals received from the central station (S$_c$) via the interface means (I$_F$);
   - a changeover switch (C$_M$) carrying out changeover switching of the amplified signals between the sector antenna (A$_s$) and the electronic-scanning antenna (A$_B$).

FIG.1

FIG.2

# FIG.3a

# FIG.3b

FIG. 4a

EP 0 433 162 B1

# FIG.4b